# EUROPEAN PATENT APPLICATION

(11) **EP 1 091 274 A2**
(43) Date of publication of application: **11.04.2001**
(21) Application number: 00121250.5
(22) Date of filing: 04.10.2000
(51) Int. Cl.: G06F 1/00

(54) **System and method for managing user permissions for accessing functionality of multiple software applications**

(30) Priority: 04.10.1999 US 411672
(71) Applicant: PITNEY BOWES INC., Stamford, Connecticut 06926-0700 (US)
(72) Inventor: Bodie, Kevin W., Bethel, Connecticut 06488 (US); Mangiamelli, Cindy, Southbury, Connecticut 06488 (US); Sonleiter, Steven P., Shelton, Connecticut 06484 (US); McManus, Deborah R., Bethel, Connecticut 06801 (US); Barns-Slavin, Ilean D., Wilton, Connecticut (US)
(74) Representative: HOFFMANN - EITLE

(57) **Abstract**

This invention overcomes the disadvantages of the prior art by providing a method of assigning user access to various functionality of software products. The present invention is directed to, in a general aspect, a method of managing user permissions for multiple software applications. The method provides a single administration point for all installed software products or applications. Users and user permissions, which are product specific rights, can be added, deleted and modified through this method. The rights can be assigned through the use of a template for categories of users or through *ad hoc* administration. The invention overcomes the disadvantages of the prior art by providing a system which is flexible and does not waste memory.

## Description

The invention disclosed herein relates generally to accessing functions in a software product and, more particularly to a method for managing user permissions for providing access to functions for multiple software products.

Computer systems such as microprocessor based systems can support multiple software products or applications. Particularly, with the use of Windows™ based operating systems, users need to access the functionality of multiple software products regularly. The software products could be products used for operating equipment, such as, for example, mail sorting equipment. Each software product could have different functionality and have rights to access such functionality which could be assigned to users based upon the users' authority. In order to limit access to particular software functionality, each software product can also provide features which limit access only to designated users. Additionally, some software programs provide general access through the use of password protection. Password security is typically provided by use of a user name and password, which is entered by a user upon initiation of use of the software.

Access to software functionality is typically provided through use of fixed access levels assigned to various individuals as user, administrator and service representative. For example, the functionality levels for software products for a particular piece of equipment could include administrator level and service representative level with each group having access to particular rights. Administrators may need rights to change set-up information and service representatives may need rights to change set-up information and access diagnostic information. Presently, these rights are through the individual software products, and the flexibility is not available to allow assigning *ad hoc* rights to a user outside of the rights that are assigned by a user's access level. For example, typically an administrator has administrative rights, but the administrator does not have the right to access a particular diagnostic function of the software. Additionally, an operator or user of the equipment has rights to run a system but would not be assigned any administrative rights.

Alternatively, user permissions could be managed using one large data file with which *ad hoc* rights could be assigned; however, the file would need many duplicate rights for each software application. As each software product has its own functionality and purpose, product rights vary from one software product to the next. For example, the right to send e-mail would be critical for an electronic mail program but would be irrelevant for a word processor software product. As such, each product's rights are define by the product's scope of functionality. However, this makes it difficult to standardize rights into a single format; the rights for one product do not necessarily correspond to another. To circumvent this problem, rights could be stored as a union of all rights for all products. This would mean that functionality that is relatively common, such as opening a file, printing a report, etc. would be represented, but that specialized rights, such as sending an e-mail as shown above, would also be included. The problem with this approach is that the probability of using each of the rights for a single software product is small and consequently the data file comprising the union of all the rights is larger than necessary and wastes valuable memory space.

Another solution would be to place all the rights of all the products into a single record in the database. This would have the advantage of making access to information easy since the information is in one data file. However, much of the information would be duplicated such as, for example, the commands "Open File for Product A" then "Open File for Product B^{"}. In addition, if any of the products were modified with respect to the information in the data file, the entire record would have to change, possibly disrupting the operation of the other products.

For each software product, a user typically has a user name and a password which he or she must remember. The configuration of each user name and password can be different in each application, for example, the number of characters, types of characters and consecutiveness of the characters may be mandated by an individual software application's security configuration. Thus, the user's choice of password for one product may not be compatible with the configuration for another product, and he or she may need to choose a different user name and password from one application to the next. Thus, one user could have many different user names and passwords. With so many applications and passwords for a user to keep track of, it is common that a user can forget a password and thus be unable to access a software application. Some users may write the user name and password on paper and store the paper in a particular place. However, this provides potential for breach of security since the written user name and password could be found by a third party who could then access the application and breach security.

Thus, one of the problems of the prior art is that assigning various functionality of software products to various users is cumbersome and wastes memory. Another problem of the prior art is that user access levels are rigid and cannot be assigned on an *ad hoc* basis. Still another problem of the prior art is that users need to manage multiple passwords and user names. Yet another problem of the prior art is that administering rights for multiple products is cumbersome.

This invention overcomes the disadvantages of the prior art by providing method of managing user permissions or rights to access functionality for multiple software applications. The foregoing is accomplished by providing a series of tables containing access rights information associated with the users and the products/software applications. The user manager provides one access point to all user rights such that the user would only need one set of user specific information such as user name and password in order to access multiple software products. Thus the present invention is directed, in a general aspect, to a method of managing user permissions for access to multiple software applications. The method provides a single administration point for all installed software products or applications. Users and user permissions, which are product specific rights, can be added, deleted and modified through this method. The rights can be assigned through the use of a template for categories of users or through *ad hoc* administration.

Thus, an advantage of the method of the present invention is that it provides a easier administration of user rights. Another advantage of the present invention is that there would be flexibility in the assignment of user rights. Another advantage of the method of the present invention is a user would need only one set of user unique information in order to access multiple software applications. Another advantage of the present invention is that a user would be less likely to compromise security by writing unique password information on paper. Other advantages of the invention will in part be obvious and will in part be apparent from the specification. The aforementioned advantages are illustrative of the advantages of the various embodiments of the present invention.
Fig. 1 is a block diagram of an embodiment of a computer system upon which multiple software products may reside.
Fig. 2 is a flow chart of an embodiment of the method of the present invention.
Fig. 3 is a block diagram of an embodiment of the present invention the relationship of tabular information configured to enable a method of the present invention.

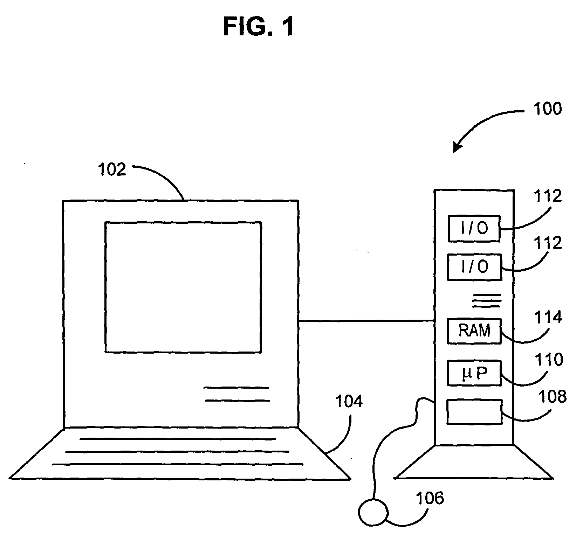

In describing the preferred embodiment of the present invention, reference will be made herein to Figs. 1-3 of the drawings in which like numerals refer to like features of the invention. Features of the invention are not necessarily shown to scale in the drawings.

### HARDWARE OVERVIEW

FIG. 1 is a block diagram that illustrates a computer system 100 upon which an embodiment of the invention may be implemented. Computer system 100 may be a personal computer, a term which is used generically and refers to present and future microprocessor systems with at least one processor operatively coupled to user interface means, such as a display 102 and keyboard 104, and/or a cursor control, such as a mouse or a trackball 106, and storage media 108. The personal computer 100 may be a workstation that is accessible by more than one user. The personal computer also includes a conventional processor 110, such as the Pentium® II processor manufactured by Intel Corporation of Santa Clara, California, conventional hard drive 108 floppy drive(s) 112, and memory 114. The present invention is related to the use of computer system 100 for controlling the access to software applications located in computer 100 and media 108. Access to the software functionality is limited by the user manager of the present invention.

### USER MANAGER

One embodiment of the present invention is directed to a *user manager* or method of managing user permissions for access to multiple software products or applications. The following definitions may be used in understanding the invention. A "user" can be an operator of any or all of the software products installed on the computer system 100. An "administrator" is a user of the method for managing user permissions of the present invention. A "product" can be a software program, system, or application for which a user may be granted access by a method of the present invention. "Permissions" can be product specific rights that may be assigned to a user; each product may have one or more permissions and some products may have no permissions..

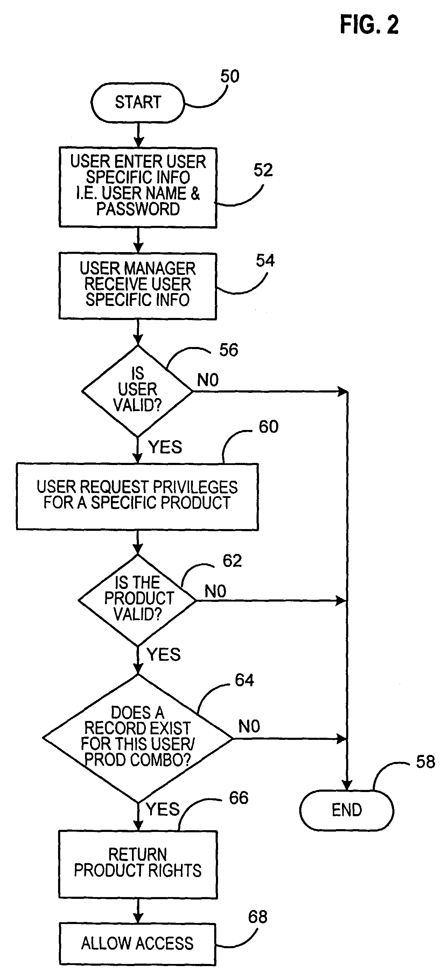

Fig. 2 is a flow chart of an embodiment of the method of the present invention illustrating the steps of inputting user information and obtaining permissive use of software through the use of the *user manager*. At step 50, the method begins. At step 52 a user enters user specific information such as, for example, a user name and password. At step 54, the *user manager* receives the user specific information. At step 56, the *user manager* makes a query as to whether the user is valid. If the user is not valid, the method ends at step 58. If the user is valid, the method continues to step 60, and the user requests privileges for a specific product. Privileges can include the right to access a product as well as the right to use a particular functionality of a product. At step 62, a query is made as to whether the product is valid. If the product is not valid, the method ends at step 58 or, alternatively, the user could input another product. If the product is valid, a query is made as to whether a record exists for this user/product combination. If the user/product combination does not exist, the method ends at step 58. If the user/product combination exists, the method continues to step 66 and the *user manager* returns products rights, and at step 68 the user is allowed access to the system to perform privileges assigned to the user.

Tables A-F illustrate an embodiment of a database schema that can be used to perform a method of the present invention. The format of tables link users to user rights and product rights. One of ordinary skill in the art could format the Schema Tables A-F using a database program such as Access® by Microsoft of Redmond, WA, and the tabular information can be input into the database in binary form. Table A illustrates user information such as, for example, a user identification and a text description of the user's full name. Table B illustrates user security information such as, for example, the use's identification the user's password and the user's administrator. Table C illustrates product information such as, for example, product identification number, product name, and product version and revisions numbers.

Additional tables illustrate user and product rights as follows. Table D illustrates Product Rights which are specific information regarding specific product rights such as, for example, a product identification, a bit identification which identifies the bit being set for the product, and a text description of the right (a right can be, for example, the right to load a job, run a job, or add a user). Table E illustrates User Rights and contains information such as user identification, product identification, one or more user rights in binary format (the number of user rights is limited only by the size of the database being used), a template identification which links the user to a specific user template such as, for example, an Operator Template or an Administrator Template. The templates can be used to give similar rights to individuals who perform similar functions. Alternatively, the template identification could be labeled to indicate that no template is being referenced and that the user rights are being administered *ad hoc*. Table F illustrates a Rights Template which contains information pertaining to a product template such as a template identification number, a product identification number, a template name and one or more product rights in binary format (the number of user rights is limited only by the size of the database being used).

### Database Schema Tables

**Table A**

| Users | |
|---|---|
| Purpose: | Contains basic user information |
| Columns: | User ID - the ID by which the user is known |
| | Full Name - A text description of the user for reference |

**Table B**

| User Security | |
|---|---|
| Purpose: | Contains security information |
| Columns: | User ID - the ID by which the user is known |
| | Password - the user's password |

**Table C**

| Products | | |
|---|---|---|
| Purpose: | Contains information on the Products stored in the system | |
| Columns: | Product ID - a number assigned by the system to uniquely identify the Product | |
| | Product Name - the name of the Product Version - the version of the product | |
| | | Version - the version of the product |
| | Revision - the product's current revision | |
| | (example: product may be version 1.2- version is 1 and revision is 2) | |

**Table D**

| Product Rights | |
|---|---|
| Purpose: | Contains information about a product's specific rights |
| Columns: | Product ID - the ID of the product, relates to Products table |
| | Bit ID - The individual bit that is being set |
| | Right Text - a text description of the specific right |

**Table E**

| User Rights | |
|---|---|
| Purpose: | Contains the actual rights information |
| Columns: | User ID - the ID by which the user is known |
| | Product ID - the ID of the product, relates to Products table |
| | User Rights - data containing user tights |
| | User Rights - data containing additional user rights |
| | Template ID - references a template if one has been assigned to a |
| | user (see Rights Template below) |

**Table F**

| Rights Template | |
|---|---|
| Purpose: | Contains Information pertaining to a Product's templates |
| Columns: | Template ID - a number identifying the template |
| | Product ID - the ID of the product, relates to Products table |
| | Template Name - a text description of the template |
| | Rights - data containing product rights |
| | Rights - data containing additional product rights |

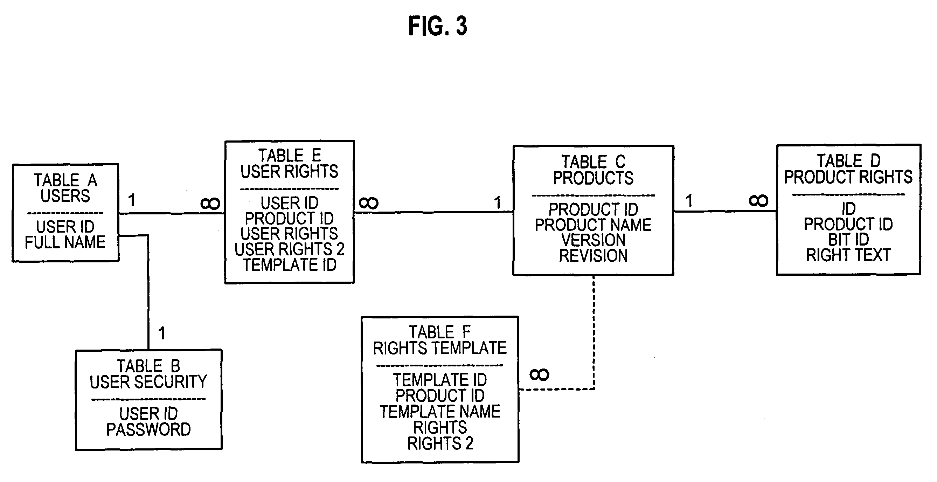

Fig. 3 is a block diagram illustrating the relationship of tabular information configured to enable a method of the present invention. As illustrated in Fig. 3, each of Database Schema Tables A-F is linked to each other. The numerals next to each block of the block diagram represent the database relationship. For example the database relationship between the User Table A and the User Security Table B is one to one; and the relationship between the User Table A and the User Rights Table E is one to many. The following explains the table linkage illustrated in Fig. 3: the User Table A is linked to the User Security Table B and the User Rights Table E; the User Rights Table E is linked to the Products Table C and the User Table A; the Products Table C is linked to the User Rights Table E, the Rights Template Table F and to the Product Rights Table D; and the Product Rights Table D is linked to the Products Table C.

The following is an example of an embodiment of the present invention demonstrating the interrelationship of Tables A-F. A user logs on using the *user manager* of the present invention by entering user specific information such as, for example, a user name, user identification and password. The user *manager* verifies the user name by checking the Users Table A, and the user identification and password by checking the User Security Table B. The *user manager* then looks at the User Rights Table E corresponding to the user identification. The *user manager* obtains a list of products that the user has rights to from the Product Table C. The *user manager* can obtain individual rights to that product from the Product Rights Table D or can get a predefined list of templates from the Rights Template Table F. This example represents a possible sequence of the functionality of the *user manager*. The method could be performed using a Dynamically Linked Library (DLL) and a relational database program such as Microsoft® Access by Microsoft Corporation of Redmond, WA. A DLL can be used by one of ordinary skill in the art and generally allows developers to bind code to one of many executable routines at run time rather than at link time, creating an environment in which many applications can use the same code base to enable the efficient and effective manipulation of complex data.

The *user manager* allows a single administration point for all software products or applications. Users can be added, deleted or modified through the schema in the database. The single integration point eliminates the need for multiple logins which could require multiple user names and multiple passwords. Thus, the *user manager* streamlines the amount of information that a user needs to remember in order to use a software product. Additionally, the *user manager* can be more secure since it reduces the chance that a user will write down the user name and password for a third party to intercept and use. Thus, the present invention provides a more simplified and secure method of managing users.

While the present invention has been disclosed and described with reference to a single embodiment thereof, it will be apparent, as noted above, that variations and modifications may be made therein. It is also noted that the present invention is not limited to managing software users. Thus, it is intended in the following claims to cover each variation and modification that falls within the true spirit and scope of the present invention.

## Claims

1. A data processing system for determining access rights to a set of one or more features of two or more software applications by a user of the system; the system comprising:
(a) user identification means for identifying the user of the system;
(b) authentication means for determining whether the identified user is authentic;
(c) a software identification table for identifying each one of the set of two or more software applications accessed by the system;
(d) a first user rights table for identifying a set of rights relative to the authenticated user and wherein the set of rights is indicative of the authenticated users access to the each one of the set of two or more software applications;
(e) a second user rights table relative to the authenticated user's access to the each one of the two or more software applications wherein the second user rights table is indicative of the authenticated users access to the set of one or more features within the each one of the set of two or more software applications; and
(f) access means for allowing the authenticated user to access the set of one or more features.

2. The data processing system as claimed in claim 1 further comprising a user rights template table for identifying a fixed set of features from the set of one or more features of the set of two or more software applications.

3. The data processing system as claimed in claim 1 wherein the user identification means for identifying the user, identifies the users name.

4. The data processing system as claimed in claim 1 wherein the authentication means for determining whether the identified user is authentic, authenticates the user by verifying the user's identification and password.

5. The data processing system as claimed in claim 1 wherein the software identification table comprises a software application identification, software application name, software application version number and software application revision number for each one of the set of two or more software applications accessed by the system.

6. The data processing system as claimed in claim 1 wherein the first user rights table for identifying a set of rights relative to the authenticated user's wherein the set of rights is indicative of the authenticated user's access to the each one of the two or more software applications accessed by the system comprises a user identification, a product identification, one or more sets of user access rights.

7. The data processing system as claimed in claim 1 wherein the first user rights table for identifying a set of rights relative to the authenticated users and wherein the set of rights is indicative of the authenticated user's access to the each one of the set of two or more software applications accessed by the system further comprises a template identification identifying a fixed set of access rights for the set of two or more software applications.

8. The data processing system as claimed in claim 1 wherein the second user rights table relative to the authenticated user's access to the each one of the set of two or more software applications wherein the second user rights table is indicative of the authenticated user's access to a set of one or more features within the each one of the set of two or more software applications comprises: a software application identification and a text description of the access right assigned by the second user rights table.

9. The data processing system as claimed in claim 1 wherein the access means for allowing the authenticated user to access the set of one or more features comprise a computer system.

10. A method of processing data for determining access rights to a set of one or more features of two or more software applications by a user of the system; the method comprising the steps of:
(a) identifying the user of the system;
(b) authenticating whether the identified user is authentic;
(c) accessing the data processing system using an access means for allowing the authenticated user to access the set of one or more features;
(d) processing a software identification table for identifying each one of the set of two or more software appilcations accessed by the system;
(e) processing a first user rights table for identifying a set of rights relative to the authenticated user and wherein the set of rights is indicative of the authenticated user's access to the each one of the two or more software applications; and
(f) processing a second user rights table relative to the authenticated user's access to the each one of the set of two or more software applications wherein the second user rights table is indicative of the authenticated user's access to the set of one or more features within the each one of the set of two or more software applications.

11. The method of processing data as claimed in claim 10 further comprising the step of processing a user rights template table identifying a fixed set of features from the set of one or more features of the set of two or more software applications.
